# EUROPEAN PATENT APPLICATION

(11) **EP 2 770 619 A2**
(43) Date of publication of application: **27.08.2014**
(21) Application number: 14153358.8
(22) Date of filing: 31.01.2014
(51) Int. Cl.: H02K 29/08

(54) **Rotating electric machine, engine, and vehicle**

(30) Priority: 26.02.2013 JP 2013036253; 14.08.2013 JP 2013168422
(71) Applicant: Yamaha Hatsudoki Kabushiki Kaisha, Iwata-shi, Shizuoka 438-8501 (JP)
(72) Inventor: Nishikawa, Takahiro, Iwata-shi, Shizuoka 438-8501 (JP); Hino, Haruyoshi, Iwata-shi, Shizuoka 438-8501 (JP)
(74) Representative: Grünecker, Kinkeldey, Stockmair & Schwanhäusser

(57) **Abstract**

A magnetic detection device provided in a rotating electric machine includes a magnetic flux input surface that is arranged so as to cross an axial direction of the crankshaft and arranged at a distant position with respect to the axial direction of the crankshaft from an end surface of the permanent magnet part and from an end surface of the teeth, the magnetic detection device being configured to detect magnetic fluxes that are emitted from the permanent magnet part to a gap space between the end surface of the teeth and the magnetic flux input surface with respect to the axial direction of the crankshaft and inputted in the axial direction of the crankshaft from the gap space to the magnetic flux input surface.

## Description

The present invention relates to a rotating electric machine, an engine, and a vehicle.

A rotating electric machine mounted to an engine of a vehicle such as a motorcycle has been conventionally known. Examples of such a rotating electric machine include a starter motor, a generator, and a starter generator. The starter motor rotates a crankshaft of an engine to start the engine at a time of engine start. The generator is rotated by the crankshaft to generate power after the engine start. The starter generator functions as a starter motor at a time of engine start and functions as a generator after the engine start.

The starter generator detects a rotational position of a rotor. When functioning as a starter motor, the starter generator controls a current to be supplied to windings of a stator based on a detection signal. When functioning as a generator, the starter generator controls power generation based on a detection signal. In this manner, the rotating electric machine mounted to an engine detects a rotational position of a rotor.

A rotating electric machine disclosed in Patent Document 1 is an outer-rotor rotating electric machine. A plurality of permanent magnets are provided to an inner circumferential surface of a back yoke of a rotor. The plurality of permanent magnets are opposed to a stator. The rotor is mounted to a crankshaft with a tubular boss portion of the rotor being fitted on the crankshaft. A drive-timing detection magnet having a ring-like shape and an ignition-timing detection magnet having a ring-like shape are provided on an outer circumferential surface of the tubular boss portion. The drive-timing detection magnet is magnetized such that magnetic poles having opposite polarities are alternately positioned in a circumferential direction of the drive-timing detection magnet. The ignition-timing detection magnet is magnetized only in a portion with respect to a circumferential direction thereof. The stator has, at a position opposed to the tubular boss portion, a drive-timing detection magnetic sensor and an ignition-timing detection magnetic sensor. The drive-timing detection magnetic sensor placed in the stator detects a change in magnetic fluxes of the drive-timing detection magnet caused by rotation of the rotor. The ignition-timing detection magnetic sensor placed in the stator detects a change in magnetic fluxes of the ignition-timing detection magnet caused by rotation of the rotor.

Patent Documents 2 to 4 disclose detecting a rotational position of a rotor without use of the ring-shaped drive-timing detection magnet and the ring-shaped ignition-timing detection magnet shown in the Patent Document 1.

A rotating electric machine disclosed in the Patent Document 2 includes a rotor and a stator arranged inside the rotor. The rotor is in the shape of a tube with a bottom. A plurality of magnets are arranged on an inner circumferential surface of a peripheral wall of the rotor. One of the plurality of magnets is magnetized such that its one end portion with respect to an axial direction has a polarity different from the polarity of the magnet. In the stator, a notch is formed between distal ends of each pair of adjacent teeth. Three magnetic sensors for obtaining a motor drive signal and one magnetic sensor for obtaining an ignition timing signal, which are integrated into a single unit, are arranged in the notch. The three magnetic sensors correspond to U, V, and W phases. Each of the magnetic sensors, which are so-called discrete components, has a leg-shaped terminal. A substrate on which the magnetic sensors are provided is arranged spaced apart from the stator with respect to the axial direction of the rotor. The leg-shaped terminal is received in the substrate, and thus each magnetic sensor is mounted on the substrate. The leg-shaped terminal extends from the substrate to a space between the teeth such that a sensor part of each magnetic sensor is positioned between the teeth. In this condition, the magnetic sensors are contained in a casing member that is arranged in the notch formed between the teeth.

A rotating electric machine disclosed in the Patent Document 3 includes a rotor and a stator arranged inside the rotor. The rotor is in the shape of a tube with a bottom. A plurality of magnets are arranged on an inner circumferential surface of a peripheral wall of the rotor. One of the plurality of magnets is magnetized such that its one end portion with respect to an axial direction has a polarity different from the polarity of the magnet. Three guide elements and one short guide element are arranged between adjacent distal ends of the stator. A circuit board is provided near an end surface of the stator facing in the axial direction of the rotor. Three magnetic sensors for obtaining a motor drive signal and one magnetic sensor for obtaining an ignition timing signal are mounted on the circuit board. The three magnetic sensors correspond to U, V, and W phases. The three magnetic sensors for obtaining the motor drive signal detect magnetic fluxes generated by the magnets via the guide elements arranged between the adjacent distal ends. The one magnetic sensor for obtaining the ignition timing signal detects magnetic fluxes generated by the magnets via the short guide element arranged between the adjacent distal ends.

A rotating electric machine disclosed in the Patent Document 4 includes a rotor and a stator arranged inside the rotor. The rotor is in the shape of a tube with a bottom. A plurality of magnets are arranged on an inner circumferential surface of a peripheral wall of the rotor. Three long magnetic elements and one short magnetic element are arranged between adjacent distal ends of the stator. A control unit is provided near an end surface of the stator facing in an axial direction of the rotor. The control unit includes a magnetic sensor for detecting a reference position of the rotor, and three magnetic sensors for controlling conduction of a coil. The three magnetic sensors correspond to U, V, and W phases. These magnetic sensors detect magnetic fluxes generated by the magnets via the magnetic elements arranged between the adjacent distal ends of the stator.

### [PRIOR ART DOCUMENTS]

### [PATENT DOCUMENTS]

[Patent Document 1] Japanese Patent Application Laid-Open No. 2003-148317
[Patent Document 2] Japanese Patent Application Laid-Open No. 2009-89588
[Patent Document 3] Japanese Patent Application Laid-Open No. 2013-27252
[Patent Document 4] Japanese Patent Application Laid-Open No. 2013-72358

The rotating electric machine disclosed in the Patent Document 1 includes the drive-timing detection magnet and the ignition-timing detection magnet in addition to the magnets provided to the back yoke of the rotor. The drive-timing detection magnetic sensor and the ignition-timing detection magnetic sensor are provided at the inner side of the stator (at a position opposed to the tubular boss portion of the rotor). Such a configuration involves problems of an increased number of parts and a complicated structure.

In the rotating electric machine disclosed in the Patent Document 1, the drive-timing detection magnet and the ignition-timing detection magnet have to be arranged spaced apart from each other with respect to the axial direction. The magnetic sensors corresponding to these detection magnets have to be provided so as not to interfere with the stator. As a result, the dimension of the rotating electric machine with respect to the axial direction is increased.

The magnets provided to the back yoke of the rotor are arranged independently of the drive-timing detection magnet and the ignition-timing detection magnet. To accurately obtain a drive timing and an ignition timing, which are based on the phases the magnets provided to the back yoke of the rotor during rotation, from the magnetic sensors, it is necessary that all of the following positional relationships are accurately adjusted. To be specific, it is necessary that a positional relationship of the drive-timing detection magnet and the ignition-timing detection magnet relative to the magnets provided to the back yoke of the rotor, a positional relationship of the drive-timing detection magnet and the drive-timing detection magnetic sensor relative to each other, and a positional relationship of the ignition-timing detection magnet and the ignition-timing detection magnetic sensor relative to each other, are accurately adjusted. This makes manufacturing and assembling complicated. There is also a problem that improvement in detection accuracy is not easy.

The rotating electric machine according to the Patent Document 2 adopts teeth whose shape is partially changed. A casing is arranged in the notch formed between the teeth, and the magnetic sensors are provided in the casing. This makes manufacturing and assembling complicated. The leg-shaped terminal extends from the substrate to the space between the teeth, so that the sensor part provided at the distal end of the terminal is positioned in the casing. This makes it difficult to adjust the position of the sensor part within the casing. As a result, a problem arises that improvement in detection accuracy is difficult.

In the rotating electric machine according to the Patent Document 3, the three guide elements and one short guide element are arranged between the adjacent distal ends of the stator. Therefore, the number of parts is large, and the structure is complicated. To enhance the detection accuracy, it is necessary that both a positional relationship of the magnets relative to the guide elements and the short guide element and a positional relationship of the guide elements and the short guide element relative to the magnetic sensors are accurately adjusted. This makes manufacturing and assembling complicated. There is also a problem that improvement in detection accuracy is not easy.

In the rotating electric machine according to the Patent Document 4, similarly to the Patent Document 3, the three long magnetic elements and the one short magnetic element are arranged between the adjacent distal ends of the stator. Thus, there are problems that manufacturing and assembling are complicated and that improvement in detection accuracy is not easy.

An object of the present invention is to provide a rotating electric machine, an engine, and a vehicle, that have a simple structure and that are able to detect a rotational position of a rotor with an improved detection accuracy. According to the present invention said object is solved by a rotating electric machine for being mounted to an engine and having the features of independent claim 1. Preferred embodiments are laid down in the dependent claims.

Accordingly, it is provided:
(1) A rotating electric machine mounted to an engine, the rotating electric machine including:
   a rotor including a rotor yoke part and a permanent magnet part provided to the rotor yoke part, the rotor yoke part being mounted to a crankshaft of the engine and configured to rotate together with the crankshaft;
   a stator including teeth on each of which a winding is wound, the stator being arranged such that the teeth are opposed to the permanent magnet part with respect to a radial direction of the crankshaft; and
   a magnetic detection device,
   the magnetic detection device including a magnetic flux input surface that is arranged so as to cross an axial direction of the crankshaft and arranged at a distant position with respect to the axial direction of the crankshaft from an end surface of the permanent magnet part and from an end surface of the teeth, the magnetic detection device being configured to detect magnetic fluxes that are emitted from the permanent magnet part to a gap space between the end surface of the teeth and the magnetic flux input surface with respect to the axial direction of the crankshaft and inputted in the axial direction of the crankshaft from the gap space to the magnetic flux input surface.

Generally, in mounting a rotating electric machine to an engine, the corresponding position of a stator relative to a crankshaft may be deviated to some extent from an intended position with respect to the axial direction of the crankshaft. In this respect, the magnetic fluxes emitted from the permanent magnet part to the gap space are relatively stable at any position with respect to the axial direction of the crankshaft.

In the configuration of (1), even when the position of attachment of the stator to the crankshaft is deviated so that the interval between the permanent magnet part and the magnetic flux input surface is different from an intended interval, little influence is given to the magnetic fluxes inputted to the magnetic flux input surface. In other words, the detection accuracy of the magnetic detection device does not largely vary depending on a change in the interval between the permanent magnet part and the magnetic flux input surface. Accordingly, the magnetic detection device is able to reliably detect a change in the magnetic fluxes of the permanent magnet part. Additionally, since the magnetic fluxes of the permanent magnet part are inputted to the magnetic flux input surface without interposition of any other magnetic element, it is possible to enhance the detection accuracy by adjusting the positional relationship of the permanent magnet part and the magnetic flux input surface relative to each other. Therefore, improving the detection accuracy is relatively easy. Moreover, an increase in the number of parts can be restricted, thus achieving a simple structure. Furthermore, a high accuracy is not required in assembling the rotating electric machine to a main body of the engine, thus facilitating an assembling operation.

Generally, upon a start of an engine, vibrations in a radial direction occur in a crankshaft along with to-and-fro movement of a piston, a connecting rod, and the like. When such vibrations of the crankshaft are transmitted to the rotor mounted to the crankshaft, the positions of the magnetic flux input surface and the permanent magnet part provided to the rotor relative to each other vary in the radial direction. In this respect, the magnetic fluxes emitted from the permanent magnet part to the gap space are stable at any position with respect to the radial direction of the crankshaft.

Therefore, even when the positions of the permanent magnet part and the magnetic flux input surface relative to each other with respect to the radial direction of the crankshaft vary along with vibrations of the crankshaft, the detection sensitivity of the magnetic detection device does not largely vary. Accordingly, the magnetic detection device is able to reliably detect a change in the magnetic fluxes of the permanent magnet part. Thus, after the rotating electric machine is assembled to the main body of the engine, the magnetic detection device is still able to correctly and reliably detect the rotational position of the rotor. As a result, a reliable control of the rotating electric machine by using a detected signal is achieved.

Here, the end surface of the permanent magnet part is an end surface that crosses the axial direction of the crankshaft and that faces the magnetic flux input surface with respect to the axial direction of the crankshaft. The end surface of the teeth is an end surface that crosses the axial direction of the crankshaft and that faces the magnetic flux input surface with respect to the axial direction of the crankshaft.

The present teaching may adopt the following configurations.

### (2) The rotating electric machine according to (1), wherein

the permanent magnet part includes a protruding portion that protrudes beyond the end surface of the teeth with respect to the axial direction of the crankshaft toward the magnetic flux input surface,
the magnetic flux input surface is arranged at a distant position with respect to the axial direction of the crankshaft from an end surface of the protruding portion,
the gap space is a space between the end surface of the protruding portion and the magnetic flux input surface with respect to the axial direction of the crankshaft,
the magnetic detection device detects magnetic fluxes that are emitted from the permanent magnet part to the gap space and inputted in the axial direction of the crankshaft from the gap space to the magnetic flux input surface.

In the configuration of (2), the permanent magnet part includes the protruding portion. The magnetic fluxes emitted from the permanent magnet part to the gap space are inputted to the magnetic flux input surface. The magnetic fluxes emitted from the permanent magnet part to the gap space are more stable at any position with respect to the axial direction and the radial direction of the crankshaft. This enables the magnetic detection device to more correctly and reliably detect the rotational position of the rotor. Moreover, since the permanent magnet part includes the protruding portion, the amount of magnetic fluxes flowing to the teeth from a portion of the permanent magnet part except the protruding portion (from a portion of the permanent magnet part opposed to the teeth with respect to the radial direction of the crankshaft) can be increased. This enables improvement in the performance of the rotating electric machine as well as improvement in the detection accuracy.

The end surface of the protruding portion of the permanent magnet part is an end surface that crosses the axial direction of the crankshaft and that faces the magnetic flux input surface with respect to the axial direction of the crankshaft.

### (3) The rotating electric machine according to (1) or (2), wherein

the magnetic flux input surface is at least partially arranged at a position closer to the permanent magnet part than to a surface of the teeth opposed to the permanent magnet part with respect to the radial direction of the crankshaft.

In the configuration of (3), at a location where the magnetic flux input surface is arranged, the magnetic fluxes emitted from the permanent magnet part to the gap space are still more stable at any position with respect to the axial direction and the radial direction of the crankshaft. This enables the magnetic detection device to further correctly and reliably detect the rotational position of the rotor.

### (4) The rotating electric machine according to any one of (1) to (3), wherein

the magnetic flux input surface is at least partially arranged between a first position and a second position with respect to the radial direction of the crankshaft,
the first position is defined as a position with respect to the radial direction of the crankshaft, the first position being a position at a distance toward radially inside from an inner end surface of the permanent magnet part with respect to the radial direction of the crankshaft, the distance corresponding to an interval between the end surface of the permanent magnet part and the end surface of the teeth with respect to the axial direction of the crankshaft,
the second position is defined as a position with respect to the radial direction of the crankshaft, the second position being an intermediate position between the inner end surface and an outer end surface of the permanent magnet part with respect to the radial direction of the crankshaft.

The tendency that the magnetic fluxes emitted from the permanent magnet part to the gap space are oriented in the axial direction of the crankshaft is high at a location between the first position and the second position with respect to the radial direction of the crankshaft. The direction and intensity of the magnetic fluxes are stable at a location between the first position and the second position with respect to the radial direction of the crankshaft. The configuration of (4), in which the magnetic flux input surface is at least partially arranged between the first position and the second position, enables the magnetic detection device to more correctly and reliably detect the rotational position of the rotor.

### (5) The rotating electric machine according to (4), wherein

the magnetic flux input surface is at least partially arranged between the first position and a third position with respect to the radial direction of the crankshaft,
the third position is defined as a position with respect to the radial direction of the crankshaft, the third position being a position where the inner end surface of the permanent magnet part with respect to the radial direction of the crankshaft is located.

The tendency that the magnetic fluxes emitted from the permanent magnet part to the gap space are oriented in the axial direction of the crankshaft is higher at a location between the first position and the third position. Accordingly, the configuration of (5), in which the magnetic flux input surface is at least partially arranged between the first position and the third position, enables the magnetic detection device to more correctly and reliably detect the rotational position of the rotor.

### (6) The rotating electric machine according to (5), wherein

the magnetic flux input surface is arranged so as to at least partially overlap the third position with respect to the radial direction of the crankshaft.

The tendency that the magnetic fluxes emitted from the permanent magnet part to the gap space are oriented in the axial direction of the crankshaft is further higher at a position where the magnetic flux input surface is located. Accordingly, the configuration of (6) enables the magnetic detection device to correctly and reliably detect the rotational position of the rotor.

### (7) The rotating electric machine according to (1) or (2), wherein

the rotor yoke part has a notch part provided in an end portion of the rotor yoke part, the end portion facing the magnetic flux input surface with respect to the axial direction of the crankshaft, the notch part being formed by cutout of a part of the rotor yoke part with respect to a circumferential direction thereof,
the permanent magnet part is exposed to the outside through the notch part with respect to the radial direction of the crankshaft,
the magnetic flux input surface is at least partially arranged between a second position and a fourth position with respect to the radial direction of the crankshaft,
the second position is defined as a position with respect to the radial direction of the crankshaft, the second position being an intermediate position between an inner end surface and an outer end surface of the permanent magnet part with respect to the radial direction of the crankshaft,
the fourth position is defined as a position with respect to the radial direction of the crankshaft, the fourth position being a position at a distance toward radially outside from the outer end surface of the permanent magnet part with respect to the radial direction of the crankshaft, the distance corresponding to half of an interval between the end surface of the permanent magnet part and an end surface provided in the notch part, the end surface facing the magnetic flux input surface with respect to the axial direction of the crankshaft.

At a location between the second position and the fourth position, magnetic fluxes of the permanent magnet part that enter and exit the notch tend to be oriented in the axial direction of the crankshaft. Besides, the direction and intensity of the magnetic fluxes are stable. Accordingly, the configuration of (7), in which the magnetic flux input surface is at least partially arranged between the second position and the fourth position, is able to more reliably detect a change in the magnetic fluxes.

### (8) The rotating electric machine according to (7), wherein

the magnetic flux input surface is at least partially arranged between the fourth position and a fifth position with respect to the radial direction of the crankshaft,
the fifth position is defined as a position with respect to the radial direction of the crankshaft, the fifth position being a position where the outer end surface of the permanent magnet part with respect to the radial direction of the crankshaft is located.

The tendency that magnetic fluxes that enter and exit the permanent magnet part through the notch are oriented in the axial direction of the crankshaft is higher at a location between the fourth position and the fifth position. Accordingly, the configuration of (8), in which the magnetic flux input surface is at least partially arranged between the fourth position and the fifth position, is able to further reliably detect a change in the magnetic fluxes.

### (9) The rotating electric machine according to (8), wherein

the magnetic flux input surface is arranged so as to at least partially overlap the fourth position with respect to the radial direction of the crankshaft.

The tendency that magnetic fluxes that enter and exit the permanent magnet part through the notch are oriented in the axial direction of the crankshaft is further higher at a position where the magnetic flux input surface is arranged. Accordingly, the configuration of (9) enables the magnetic detection device to particularly reliably detect a change in the magnetic fluxes.

### (10) An engine including the rotating electric machine according to any one of (1) to (9).

The rotating electric machine included in the engine of (10) is able to correctly and reliably detect the rotational position of the rotor. Therefore, a reliable control of the rotating electric machine by using a detected signal is achieved. For example, in a case where the rotating electric machine functions as a starter motor, the startability of the engine is improved. In a case where the rotating electric machine functions as a generator, the efficiency of power generation is improved. In a case where the rotating electric machine functions as a starter generator, the startability of the engine and the efficiency of power generation are improved. Additionally, the configuration of the rotating electric machine is simple, and an increase in the number of parts is suppressed. This enables downsizing and weight-reduction of the engine.

### (11) The engine according to (10), wherein

the engine includes the crankshaft and a crank casing,
the magnetic flux input surface is arranged so as to cross the axial direction of the crankshaft and arranged between the crank casing and the rotor with respect to the axial direction of the crankshaft.

Normally, there is a space between the crankshaft and the rotor with respect to the axial direction of the crankshaft. In the configuration of (11), the magnetic flux input surface of the magnetic detection device is arranged such a normally-existing space. This achieves further simplification of the configuration.

### (12) A vehicle including the engine according to (10) or (11).

In the engine included in the vehicle of (12), the rotating electric machine is able to correctly and reliably detect the rotational position of the rotor. Therefore, a reliable control of the rotating electric machine by using a detected signal is achieved. Accordingly, for example, the startability of the engine and the efficiency of power generation are improved. Additionally, the configuration of the rotating electric machine is simple, and an increase in the number of parts is suppressed. This enables downsizing and weight reduction of the vehicle.

### [EFFECTS OF THE INVENTION]

The present teaching can provide a rotating electric machine, an engine, and a vehicle, that have a simple structure and that are able to detect a rotational position of a rotor with an improved detection accuracy.

### [BRIEF DESCRIPTION OF THE DRAWINGS]

[FIG. 1] A cross-sectional view schematically showing an engine according to a preferred embodiment.
[FIG. 2] A cross-sectional view showing, on an enlarged scale, a rotating electric machine of FIG. 1 and therearound.

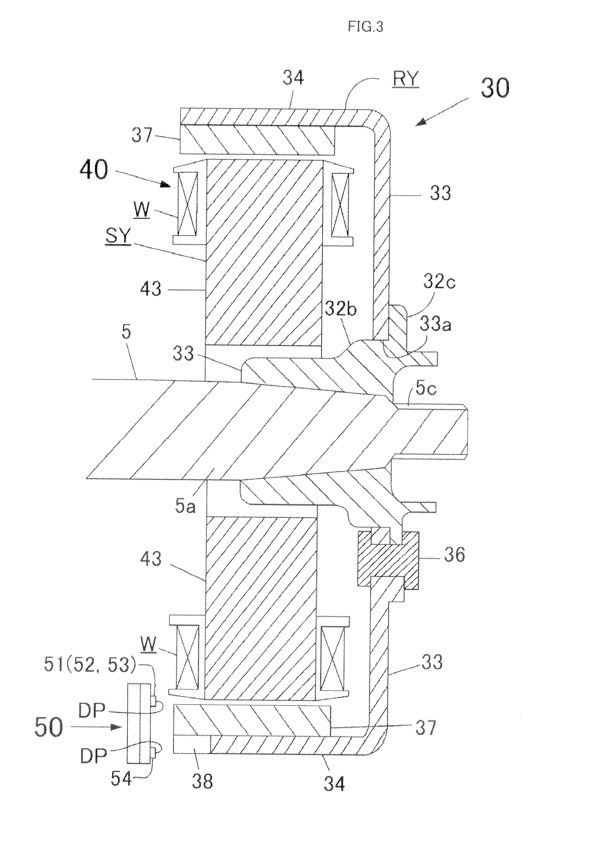

[FIG. 3] A cross-sectional view showing, on an enlarged scale, the rotating electric machine of FIG. 1.

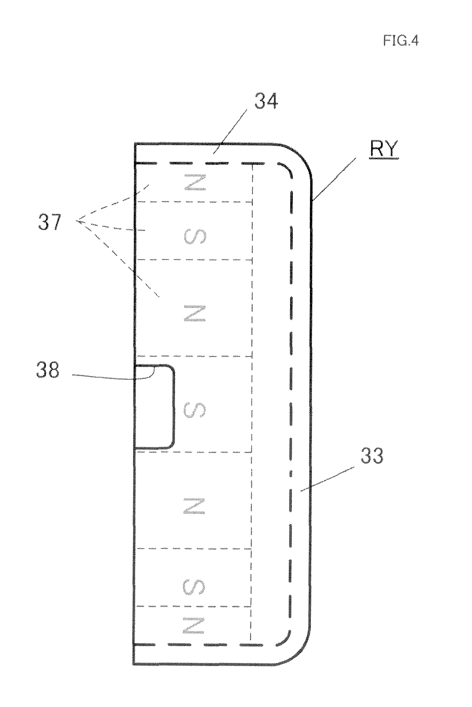

[FIG. 4] A side view of a rotor yoke part of the rotating electric machine of FIG. 1 as seen from the outer side with respect to a radial direction of a crankshaft.
[FIG. 5] A cross-sectional view showing a cross-section of the rotating electric machine of FIG. 1, as taken along a line perpendicular to a rotation axis line of the rotating electric machine.
[FIG. 6] A plan view of a magnetic detector unit of the rotating electric machine of FIG. 1.
[FIG. 7] A perspective view showing the entire rotating electric machine of FIG. 1.
[FIG. 8] A cross-sectional view showing, on an enlarged scale, a cross-section as taken along the line 8-8 of FIG. 5.
[FIG. 9] A cross-sectional view showing, on an enlarged scale, a cross-section as taken along the line 9-9 of FIG. 5.
[FIG. 10] A graph showing output signals of a second magnetic detection device and a fourth magnetic detection device.
[FIG. 11] An explanatory diagram schematically showing a magnetic flux distribution at a location near an end surface of a permanent magnet part in a place where no notch is formed in a peripheral wall of a rotor yoke part.
[FIG. 12] An explanatory diagram schematically showing a magnetic flux distribution at a location near the end surface of the permanent magnet part in a place where a notch is formed in the peripheral wall of the rotor yoke part included in a rotor.
[FIG. 13] An explanatory diagram showing an arrangement of magnetic detection devices in a rotating electric machine with16 poles and 12 slots.
[FIG. 14] An explanatory diagram showing an arrangement of magnetic detection devices in a rotating electric machine with 8 poles and 12 slots.

### [EMBODIMENTS FOR CARRYING OUT THE INVENTION]

The background to accomplishment of the present teaching relates the rotating electric machine has the following two problems.

A first problem is that, at a time of fixing a rotor of the rotating electric machine to a crankshaft of an engine, a large assembly error of the rotor relative to the crankshaft tends to occur with respect to an axial direction. A second problem is that the crankshaft, when used, is likely to vibrate in a radial direction of the crankshaft along with to-and-fro movement of a piston of the engine. This causes the rotor mounted to the crankshaft to vibrate in the radial direction of the crankshaft. These problems are problems inherent to a rotating electric machine that is mounted to an engine.

Against the above-described problems inherent to a rotating electric machine that is mounted to an engine, for example, the rotating electric machine of the Patent Document 2 adopts a configuration in which a magnetic sensor is arranged opposed to a permanent magnet part of a rotor with respect to a radial direction of a crankshaft. The magnetic sensor is interposed between adjacent teeth of a stator and it is fixed in this condition. Arranging the magnetic sensor in this manner makes sure that the magnetic sensor can detect magnetic fluxes of the permanent magnet part even when some degree of assembly error of the rotor relative to the crankshaft occurs in an axial direction. Additionally, even if the rotor vibrates in the radial direction along with vibrations of the crankshaft in the radial direction, it does not give much influence on detection accuracy of the magnetic sensor. That is, in the rotating electric machine of the Patent Document 2, the magnetic sensor is arranged in a region having as high a magnetic flux density as possible, to restrict an influence exerted on the detection accuracy by the assembly error between the crankshaft and the stator and by the vibrations of the crankshaft. Therefore, the rotating electric machine of the Patent Document 2 is able to solve the first and second problems inherent to a rotating electric machine that is mounted to an engine.

In the rotating electric machine of the Patent Document 2, however, the magnetic sensor is arranged between the adjacent teeth of the stator, which is a complicated structure. A leg-shaped terminal of the magnetic sensor extends from a substrate to the teeth, so that a sensor part provided at the distal end of the terminal is positioned within a casing. This makes it difficult to adjust the position of the sensor part. As a result, a problem arises that improvement in detection accuracy is difficult.

The present inventors have changed the way of thinking and deviated from the idea of arranging a magnetic detection device in a region having as high a magnetic flux density as possible in a rotating electric machine that is mounted to an engine, and instead considered arranging a magnetic flux input surface in a region having a low magnetic flux density. Firstly, the present inventors have conducted detailed analysis and examination about magnetic fluxes that enter and exit a field permanent magnet part of a rotor of a rotating electric machine that is mounted to an engine.

As a result, the present inventors have found out the following facts concerning the rotating electric machine that is mounted to an engine. That is, the intensity of magnetic fluxes emitted from the permanent magnet part in an axial direction of a crankshaft is lower than the intensity of magnetic fluxes emitted in a radial direction of the crankshaft. However, among the magnetic fluxes emitted from the permanent magnet part in the axial direction of the crankshaft, magnetic fluxes emitted from the permanent magnet part to a gap space are stabilized in terms of the direction and the intensity. Accordingly, a change in magnetic fluxes of the permanent magnet part caused by rotation of the rotor can be stably and reliably detected, even at a location that is distant from an end surface of the permanent magnet part and from an end surface of the teeth with respect to the axial direction of the crankshaft.

Based on the findings, in the rotating electric machine that is mounted to an engine, arranging a magnetic flux input surface in the above-described position can reduce the number of parts, simplify a structure and a manufacturing process, and moreover keep a high detection accuracy. Based on this reveal, the present teaching relates to the rotating electric machine that is mounted to an engine.

In a magnetic detection device according to the present teaching, a magnetic flux input surface of the magnetic detection device is arranged so as to cross an axial direction of a crankshaft and arranged at a distant position with respect to the axial direction of the crankshaft from an end surface of a permanent magnet part. In the Patent Documents 2 to 4, on the other hand, a magnetic flux input surface to which magnetic fluxes of magnets are inputted is opposed to the magnets with respect to an axial direction of a crankshaft. Thus, the present teaching is different from the Patent Documents 2 to 4, in terms of the position of the magnetic flux input surface.

The magnetic detection device of the present teaching detects magnetic fluxes that are emitted from the permanent magnet part to a gap space (a space between the end surface of the teeth and the magnetic flux input surface with respect to the axial direction of the crankshaft) and that are inputted, in the axial direction of the crankshaft, from the gap space to the magnetic flux input surface. In the Patent Documents 2 to 4, on the other hand, the magnetic fluxes detected by the magnetic detection device are inputted from the magnets to the magnetic flux input surface that is opposed to the magnets with respect to the radial direction of the crankshaft. Thus, the present teaching is different from the Patent Documents 2 to 4, in terms of the magnetic fluxes detected by the magnetic detection device.

Hereinafter, a preferred embodiment will be described with reference to the drawings.

An engine E according to this embodiment is provided in a motorcycle (not shown). The engine E includes a rotating electric machine SG that functions as a starter generator. At a time of engine start, the rotating electric machine SG functions as a starter motor that rotates a crankshaft 5 of the engine E. After the engine start, the rotating electric machine SG is rotated by the crankshaft 5, and functions as a generator. A rotating electric machine of the present teaching may be used as a starter motor without being used as a generator. Alternatively, the rotating electric machine of the present teaching may be used as a generator without being used as a starter motor.

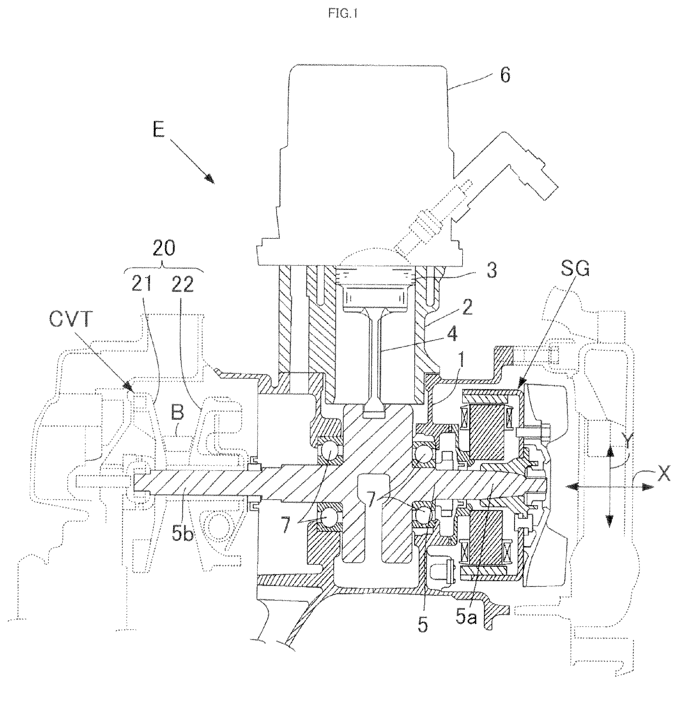

As shown in FIG. 1, the engine E includes a crank casing 1, a cylinder 2, a piston 3, a connecting rod 4, and a crankshaft 5. The cylinder 2 extends from the crank casing 1 in a predetermined direction (for example, obliquely upward). The piston 3 is arranged in the cylinder 2 in such a manner that the piston 3 is freely movable to and fro. The connecting rod 4 has one end portion (for example, an upper end portion) thereof coupled to the piston 3, and the other end portion (for example, a lower end portion) thereof coupled to the crankshaft 5. The crankshaft 5 is arranged in the crank casing 1 in a rotatable manner.

A cylinder head 6 is attached at the upper end of the cylinder 2. The crankshaft 5 is rotatably supported on the crank casing 1 with interposition of a pair of bearings 7. One end portion 5a (a right end portion in FIG. 1) of the crankshaft 5 extends out of the crank casing 1. The rotating electric machine SG is mounted to the one end portion 5a of the crankshaft 5.

The other end portion 5b (a left end portion in FIG. 1) of the crankshaft 5 extends out of the crank casing 1. A primary pulley 20 of a continuously variable transmission CVT is attached to the other end portion 5b of the crankshaft 5. The primary pulley 20 includes a fixed sheave 21 and a movable sheave 22. The fixed sheave 21 is provided at the distal end of the other end portion 5b of the crankshaft 5 in such a manner that the fixed sheave 21 rotates together with the crankshaft 5. The movable sheave 22 is provided to the other end portion 5b of the crankshaft 5. The movable sheave 22 is freely movable in an axial direction X. The movable sheave 22 is configured to rotate together with the crankshaft 5 with the interval between the movable sheave 22 and the fixed sheave 21 varying. A belt B is wrapped on the primary pulley 20 and a secondary pulley (not shown). The belt B transmits a rotation force of the crankshaft 5 to a drive wheel (not shown) of the vehicle.

This embodiment illustrates a single-cylinder engine E structured as shown in FIG. 1. In the present teaching, however, a specific configuration of an engine main body is not limited to the configuration illustrated in this embodiment.

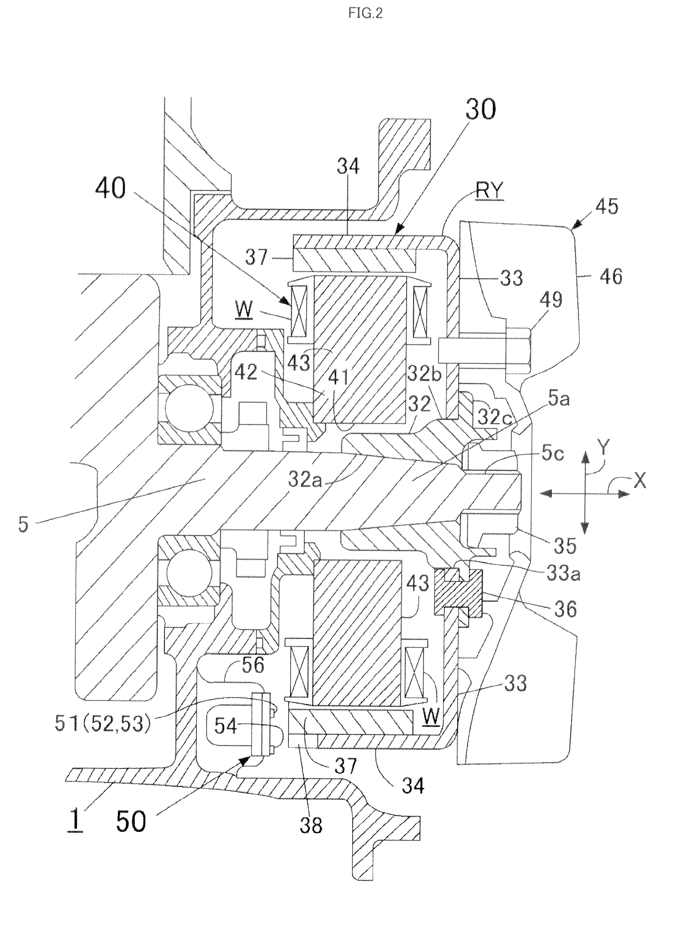

In the following, the rotating electric machine SG will be described in detail. The rotating electric machine SG includes a rotor 30, a stator 40, and a magnetic detector unit 50, as shown in FIG. 2.

The rotor 30 includes a rotor yoke (part) RY and permanent magnet parts 37 fixed to the rotor yoke RY. The rotor yoke RY is, for example, in the shape of a tube with a bottom and made of a ferromagnetic material. The rotor yoke RY includes a tubular boss portion 32, a disk-shaped bottom wall 33, and a tube-shaped peripheral wall 34. The tubular boss portion 32 is a member for fixing the rotor 30 to the crankshaft 5 under a state where the one end portion 5a of the crankshaft 5 is received in the tubular boss portion 32. The bottom wall 33, which is fixed to the tubular boss portion 32, extends in a radial direction Y of the crankshaft 5. The peripheral wall 34 extends from an outer circumferential edge of the bottom wall 33 in the axial direction X of the crankshaft 5 (i.e., in the direction toward the crank casing).

The bottom wall 33 and the peripheral wall 34 are integrally formed through, for example, a stamping process performed on a metal plate. The tubular boss portion 32 has, at the center thereof, a tapered reception hole 32a for receiving the one end portion 5a of the crankshaft 5. The tapered reception hole 32a extends in the axial direction X of the crankshaft 5. The tapered reception hole 32a has a taper angle that corresponds to an outer circumferential surface of the one end portion 5a of the crankshaft 5. The one end portion 5a of the crankshaft 5 is inserted into the tapered reception hole 32a, and thus the outer circumferential surface of the one end portion 5a is, through the entire length thereof, brought into contact with an inner circumferential surface of the reception hole 32a. Under this condition, the crankshaft 5 is fixed to the reception hole 32a. As a result, the position of the tubular boss portion 32 is settled with respect to the axial direction X of the crankshaft 5.

Under such a condition that the one end portion 5a of the crankshaft 5 is received in the tubular boss portion 32, a nut 35 is screwed onto a male thread 5c formed at the distal end of the one end portion 5a of the crankshaft 5. Thus, the tubular boss portion 32 is fixed to the crankshaft 5. That is, the rotor 30 is fixed to the crankshaft 5.

The tubular boss portion 32 has a large-diameter portion 32b that is provided in a proximal end portion (a right-hand portion of the tubular boss portion 32 in FIG. 1) of the tubular boss portion 32. A flange portion 32c is formed on an outer circumferential surface of the large-diameter portion 32b. The flange portion 32c extends radially outward. A hole 33a is formed in a central portion of the bottom wall 33 of the rotor yoke RY. The large-diameter portion 32b of the tubular boss portion 32 is received in the hole 33a of the bottom wall 33 such that the flange portion 32c is in contact with an outer circumferential surface (a right-hand surface in FIG. 1) of the bottom wall 33. The flange portion 32c of the tubular boss portion 32 and the bottom wall 33 of the rotor yoke RY are integrally fixed by rivets 36 at a plurality of locations with respect to a circumferential direction of the rotor yoke RY. The rivets 36 penetrate through the flange portion 32c and the bottom wall 33.

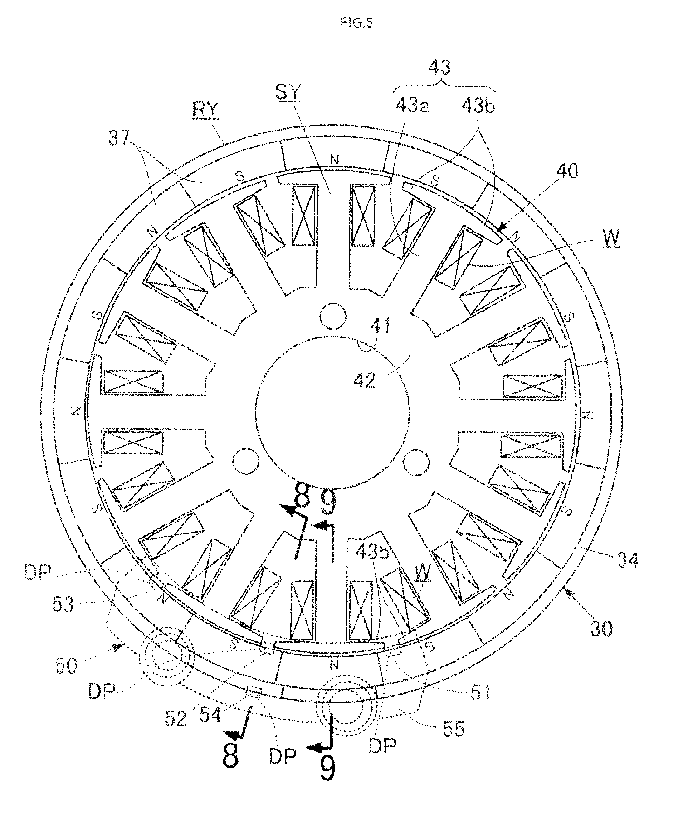

The permanent magnet parts 37 are fixed to an inner circumferential surface of the peripheral wall 34 of the rotor yoke RY. The permanent magnet parts 37 are arranged in such a manner that N pole and S pole alternately appear in a circumferential direction of the starter motor SG. The N pole and S pole of each permanent magnet part 37 are arranged side by side in the radial direction Y of the crankshaft 5. In this embodiment, as shown in FIG. 5, the total number of magnetic poles including N poles and S poles is sixteen. The permanent magnet part 37 is formed by mixing a magnet powder into a plastic resin, then forming a resultant into a cylindrical shape, then solidifying a resultant, and then magnetizing a resultant in the radial direction Y of the crankshaft 5 such that the magnetic poles alternate in the circumferential direction as described above. Adoption of such a bonded magnet makes it easy to manufacture the permanent magnet part 37. As the permanent magnet part 37, for example, an NdFeB bonded magnet is suitably used. Instead of the bonded magnet, a plurality of sintered magnet pieces may be arranged in the circumferential direction. In the present teaching, no limitation is put on the type of the permanent magnet part, the shape of the permanent magnet part, the number of magnetic poles, and the like.

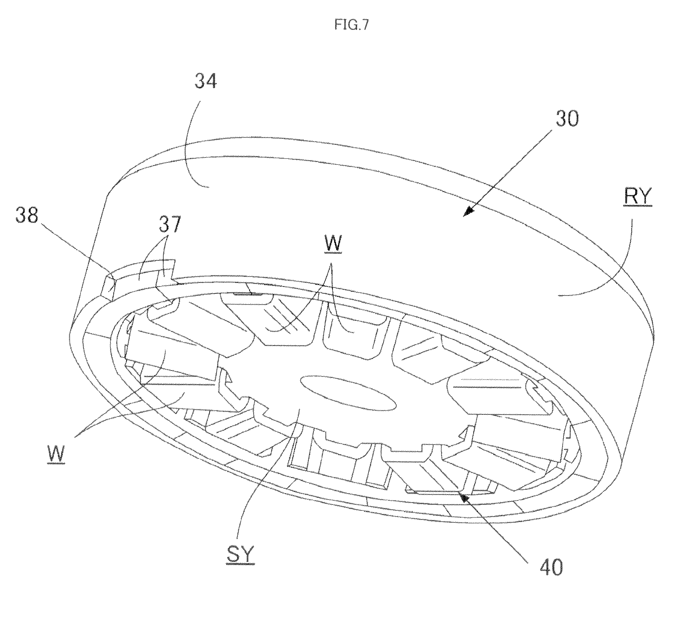

As shown in FIG. 7, the peripheral wall 34 of the rotor yoke RY has a notch (part) 38. The notch 38 is formed in an end portion of the peripheral wall 34 that faces the crank casing. The notch 38 is formed in a part of the end portion with respect to the circumferential direction. The notch 38 is formed in order to detect the absolute rotational position of the rotor 30, as will be described later. The permanent magnet parts 37 are partially exposed to the radially outside through the notch 38. In other words, magnetic fluxes of the permanent magnet parts 37 are inputted and outputted in the radial direction through the notch 38. As a result, in the peripheral wall 34 of the rotor yoke RY having a cylindrical shape, a region where the state of a magnetic field is changed occurs only in a part of the peripheral wall 34 with respect to the circumferential direction.

In this embodiment, the notch 38 is formed only in a part of the end portion with respect to the circumferential direction. Instead, it may be acceptable that a long notch continuously extending in the circumferential direction is formed so that only a part of the peripheral wall 34 with respect to the circumferential direction is left. In such a case, a portion having no notch, that is, a protrusion, is formed in a part of the peripheral wall 34 with respect to the circumferential direction. In this case as well, a region where the state of a magnetic field is changed occurs only in a part of the peripheral wall 34 of the rotor yoke RY with respect to the circumferential direction. No particular limitation is put on the shape of the notch and the number of the notches.

The rotor 30 mounted to the crankshaft 5 so as to rotate together with the crankshaft 5 in the above-described manner also functions as a flywheel of the engine E. A rotation axis line of the crankshaft 5 is coincident with a rotation axis line of the rotor 30. As shown in FIG. 2, a cooling fan 45 including a plurality of blades 46 is fixed to the outer circumferential surface (the right-hand surface in FIG. 2) of the bottom wall 33 of the rotor 30. The cooling fan 45 is fixed to the outer circumferential surface of the bottom wall 33 by means of a plurality of bolts 49.

As shown in FIG. 5, the stator 40 includes a stator yoke SY and windings W. The stator yoke SY includes a tubular core 42 and teeth 43. The tubular core 42 has a hole 41 formed at the center of the tubular core 42. The inner diameter of the hole 41 is larger than the outer diameter of the tubular boss portion 32 of the rotor 30. The teeth 43 integrally extend radially outward from the outer circumferential surface of the tubular core 42.

In this embodiment, twelve teeth 43 in total are arranged at equal intervals in the circumferential direction. Each tooth 43 includes a main portion 43a and a pair of lateral protrusions 43b. The main portion 43a extends in the radial direction from the tubular core 42. The pair of lateral protrusions 43b are provided at the distal end of the main portion 43a. The pair of lateral protrusions 43b extend in the circumferential direction from opposite sides of the distal end of the main portion 43a with respect to the circumferential direction. The stator yoke SY is obtained by, for example, thin silicon steel plates being stacked in the axial direction. This can reduce an eddy current loss. The winding W is wound around the main portion 43a of the tooth 43.

As shown in FIG. 2, the crankshaft 5 and the tubular boss portion 32 of the rotor 30 are received in the hole 41 of the tubular core 42 with a gap between them and a wall surface defining the hole 41, and the stator 40 under this condition is fixed to the crank casing 1 of the engine E. Distal end surfaces of the teeth 43 of the stator 40 with respect to the radial direction Y are opposed to inner circumferential surfaces of the permanent magnet parts 37 included in the rotor 30 with a predetermined gap therebetween. As described above, the rotor 30 and the crankshaft 5 of the engine E rotate integrally.

To cause the rotating electric machine SG to function as a starter motor, a control unit having a function of a driver (not shown) rotates the rotor 30 with controlling of a current to be supplied to each winding W of the stator 40. Thus, the rotating electric machine SG functions as a brushless motor. Rotation of the rotor 30 causes rotation of the crankshaft 5 that is coupled to the rotor 30. Along with rotation of the crankshaft 5, the piston 3 is moved to-and-fro via the connecting rod 4, so that the engine E is started.

After the engine start, the to-and-fro movement of the piston 3 of the engine E is transmitted to the crankshaft 5 through the connecting rod 4. The crankshaft 5 rotates, and the rotor 30 fixed to the crankshaft 5 rotates. Accordingly, the permanent magnet parts 37 of the rotor 30 rotate around the outer circumference of the stator 40. At this time, magnetic fluxes of the permanent magnet parts 37 cross the windings W wound on the teeth 43 of the stator 40. This causes an induced electromotive force to occur in the windings W. In this manner, after the engine start, the rotating electric machine SG functions as a generator.

To cause the rotating electric machine SG to operate as a device for starting the engine E, it is necessary to control the rotating electric machine by detecting a rotational position of the rotor 30 and generating a rotational position signal corresponding to the rotational position. To obtain an ignition timing for igniting the engine E, it is necessary to detect an absolute rotational position of the rotor 30 and generate a rotational position signal corresponding to the absolute rotational position, so that the engine E is ignited. Therefore, in this embodiment, the magnetic detector unit 50 including a plurality of magnetic detection devices 51 to 54 is provided for the purpose of obtaining rotational position information of the rotor 30.

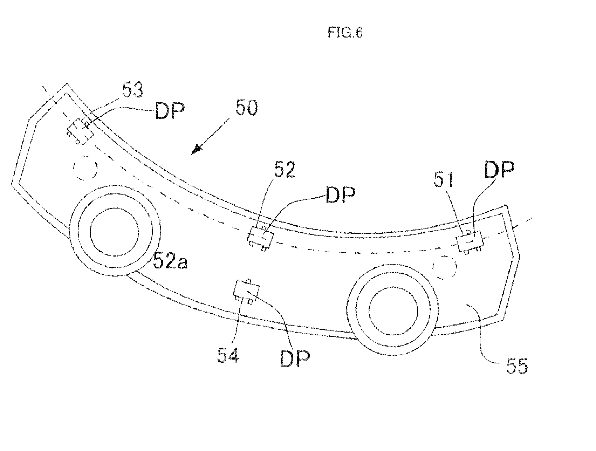

As shown in FIGS. 5 and 6, the magnetic detector unit 50 includes a substrate 55. The substrate 55 has an arc-like shape extending in the circumferential direction of the rotor 30. The substrate 55 has a predetermined width in the radial direction of the rotor 30. The substrate 55 includes four magnetic detection devices 51 to 54. No particular limitation is put on the magnetic detection devices 51 to 54, and, for example, a Hall effect sensor device (Hall Effect Sensor IC) may be adoptable. In this embodiment, the magnetic detection devices 51 to 54 are surface mount components, and mounted on a surface of the substrate 55.

In the present teaching, the magnetic detection device may be either a surface mount component or a discrete component. In the present teaching, unlike in the Patent Document 2, the structure can be simplified. Therefore, in the present teaching, adoption of a discrete component does not complicate the manufacturing and assembling, and can improve the detection accuracy. It is preferable that the magnetic detection device is a surface mount component, because adoption of a surface mount component can facilitate the manufacturing and assembling, and can further improve the detection accuracy.

As shown in FIG. 6, magnetic flux input surfaces DP of first to third magnetic detection devices 51 to 53 are arranged on the same circle (on the alternate long and short dash line in FIG. 6) that is located radially outward of an inner circumferential edge of the substrate 55. The magnetic flux input surfaces DP of the first to third magnetic detection devices 51 to 53 are arranged in a manner as shown in FIG. 5.

To be specific, each of the magnetic flux input surfaces DP of the first to third magnetic detection devices 51 to 53 is arranged between the lateral protrusions 43b of adjacent teeth 43 at an interval of electrical angle 120° corresponding to the windings W that are adjacent in the circumferential direction. As shown in FIG. 5, the magnetic flux input surfaces DP of the first to third magnetic detection devices 51 to 53 are arranged at positions overlapping inner circumferential surfaces of the permanent magnet parts 37 when seen in the axial direction X of the crankshaft 5. As shown in FIG. 6, a magnetic flux input surface DP of a fourth magnetic detection device 54 is arranged at a position that corresponds to the magnetic flux input surface DP of the second magnetic detection device 52 with respect to the circumferential direction and that is distant radially outward from the magnetic flux input surface DP of the second magnetic detection device 52. As shown in FIG. 5, the fourth magnetic detection device 54 is arranged at a position overlapping an outer circumferential surface of the peripheral wall 34 of the rotor yoke RY when seen in the axial direction X of the crankshaft 5. A preferred manner of arrangement of the first to fourth magnetic detection devices 51 to 54 will be described later.

As shown in FIG. 2, the magnetic detector unit 50 is fixed to the crank casing 1 with interposition of an attachment part 56. In other words, the magnetic detector unit 50 is, while being separated from the stator 40, fixed in the engine E. Thus, in this embodiment, a support member, or the like, is not interposed between the magnetic detector unit 50 and the stator 40. Only an air gap exists therebetween. In the present teaching, it may not be always necessary that the magnetic detector unit 50 and the stator 40 are physically separated. In a possible example, the magnetic detector unit 50 has an attachment part, and the attachment part is fixed to the stator 40. The magnetic flux input surfaces DP of the first to fourth magnetic detection devices 51 to 54 are arranged between the crankshaft 5 and the rotor 30 with respect to the axial direction X of the crankshaft 5.

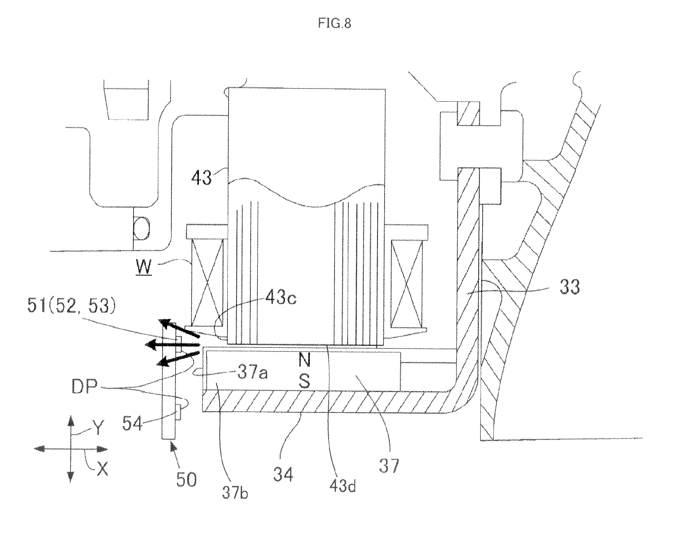

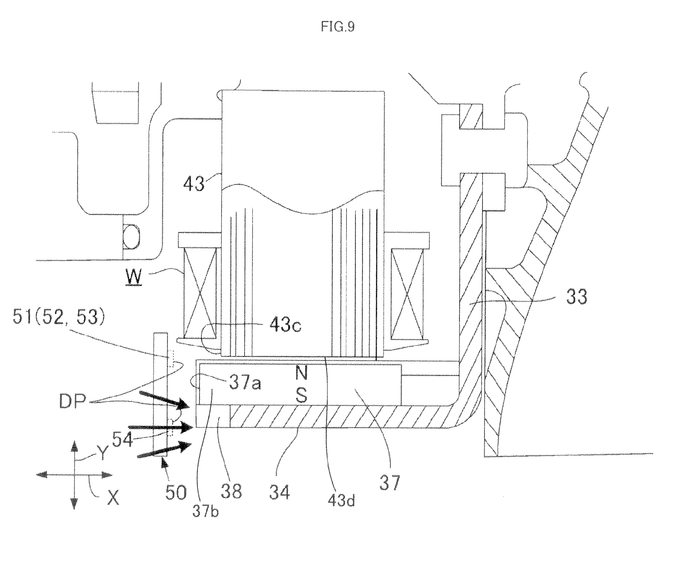

As shown in FIGS. 8 and 9, the magnetic flux input surfaces DP of the first to fourth magnetic detection devices 51 to 54 included in the magnetic detector unit 50 are arranged at positions that are distant from end surfaces 37a of the permanent magnet parts 37 with respect to the axial direction X of the crankshaft 5. The magnetic flux input surfaces DP of the first to fourth magnetic detection devices 51 to 54 included in the magnetic detector unit 50 are arranged at positions that are distant from end surfaces 43c of the teeth 43 with respect to the axial direction X of the crankshaft 5. The magnetic flux input surfaces DP of the first to fourth magnetic detection devices 51 to 54 are arranged so as to cross the axial direction X of the crankshaft 5. In this embodiment, each of the magnetic flux input surfaces DP is arranged perpendicular to the axial direction X of the crankshaft 5. In other words, each of the magnetic flux input surfaces DP is arranged so as to extend in parallel with the radial direction Y of the crankshaft 5.

As shown in FIG. 8, magnetic fluxes of the permanent magnet parts 37 are inputted to the magnetic flux input surfaces DP of the first to third magnetic detection devices 51 to 53. In more detail, the permanent magnet part 37 includes a protruding portion 37b that protrudes beyond the end surface 43c (the left-hand surface in FIG. 8) of the tooth 43 toward (i.e., leftward) the magnetic flux input surfaces DP with respect to the axial direction X of the crankshaft 5. The magnetic flux input surface DP is arranged at a position that is distant from the end surface 37a of the protruding portion 37b with respect to the axial direction X of the crankshaft 5. The first to third magnetic detection devices 51 to 53 detect magnetic fluxes that are emitted from the permanent magnet parts 37 to a gap space between the end surface 37a of the protruding portion 37b and the magnetic flux input surfaces DP with respect to the axial direction X of the crankshaft 5 and inputted in the axial direction X of the crankshaft 5 from the gap space to the magnetic flux input surfaces DP. The magnetic fluxes are inputted at the right angle or an acute angle relative to the magnetic flux input surfaces DP of the first to third magnetic detection devices 51 to 53. This enables the first to third magnetic detection devices 51 to 53 to reliably detect a change in magnetic fluxes caused when the rotor 30 rotates.

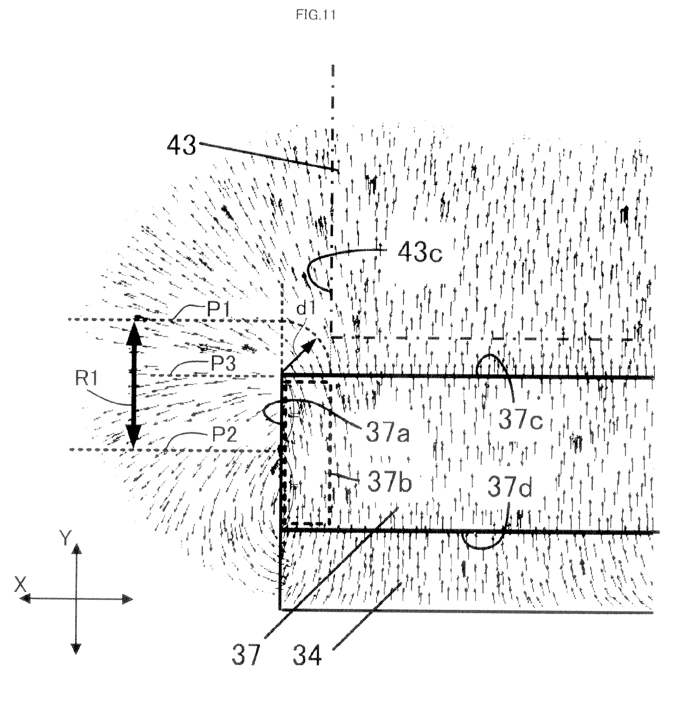

FIG. 11 shows a magnetic flux distribution in a place where the notch 38 of the rotor yoke RY is not provided. A region R1 shown in the left part of FIG. 11 is sandwiched between the two, upper and lower broken lines. The region R1 indicates a preferable region where the first to third magnetic detection devices 51 to 53 are preferably arranged.

Details of the preferable region R1 will be described with reference to FIG. 11. In this embodiment, as shown in FIG. 11, magnetic fluxes directed to the tooth 43 enter and exit the permanent magnet part 37 through its portion except the protruding portion 37b. Magnetic fluxes directed to the outside of the tooth 43 enter and exit the permanent magnet part 37 through the protruding portion 37b. In this embodiment, any of the magnetic detection devices 51 to 54 detects magnetic fluxes that are emitted from the permanent magnet parts 37 to the gap space between the end surface 43c (the left-hand surface in FIG 11) of the tooth 43 and the magnetic flux input surfaces DP (not shown) with respect to the axial direction X of the crankshaft 5 and inputted in the axial direction X of the crankshaft 5 from the gap space to the magnetic flux input surfaces DP. Magnetic fluxes emitted from the protruding portions 37b of the permanent magnet parts 37 are inputted to the magnetic flux input surfaces DP of the magnetic detection devices 51 to 53. The magnetic detection devices 51 to 53 detect a change in the magnetic fluxes that enter and exit the protruding portions 37b of the permanent magnet parts 37.

Referring to FIG. 11, the preferable region R1 is a region located between a first position P1 and a second position P2. It is preferable that the magnetic flux input surface DP of the magnetic detection device (first to third magnetic detection devices 51 to 53) is at least partially arranged in the region R1. It is more preferable that the magnetic flux input surface DP of the magnetic detection device (first to third magnetic detection devices 51 to 53) is entirely arranged in the region R1.

The first position P1 is defined as follows. The interval between the end surface 37a of the permanent magnet part 37 and the end surface 43c of the tooth 43 with respect to the axial direction X of the crankshaft 5 is defined as d1. Then, a position is set that is at a distance d1, which is equivalent to the interval, toward the inside with respect to the radial direction Y of the crankshaft 5 from an inner end surface 37c of the permanent magnet part 37 with respect to the radial direction Y of the crankshaft 5. The position thus set is defined as the first position P1 with respect to the radial direction of the crankshaft 5. The second position P2 is defined as follows. An intermediate position is set that is intermediate between the inner end surface 37c and an outer end surface 37d of the permanent magnet part 37 with respect to the radial direction Y of the crankshaft 5. The intermediate position thus set is defined as the second position P2 with respect to the radial direction Y of the crankshaft 5. The second position P2 is defined as an intermediate position of the thickness of the permanent magnet part 37 with respect to the radial direction Y of the crankshaft 5.

In the region R1 located between the first position P1 and the second position P2, as shown in FIG. 11, the magnetic fluxes emitted from the permanent magnet part 37 to the gap space between the end surface 37a (the left-hand surface in FIG. 11) of the protruding portion 37b and the magnetic flux input surfaces DP (not shown) with respect to the axial direction X of the crankshaft 5 are oriented in the axial direction X of the crankshaft 5. Since the magnetic flux input surfaces DP of the first to third magnetic detection devices 51 to 53 are at least partially arranged in the region R1, the magnetic fluxes are inputted to the magnetic flux input surfaces DP at the right angle or an acute angle relative to the magnetic flux input surfaces DP.

In the region R1, the amount and direction of the magnetic fluxes inputted to the magnetic flux input surfaces DP do not largely vary at different positions with respect to the axial direction X of the crankshaft 5. Accordingly, a difference in the position of the magnetic flux input surface DP does not give a large influence to the detection accuracy. As shown in FIG. 11, at and in the vicinity of a third position P3, the magnetic fluxes are oriented in the axial direction X of the crankshaft 5 and substantially in parallel with the axial direction X of the crankshaft 5. The third position P3 is a position corresponding to the inner end surface 37c of the permanent magnet part 37 with respect to the radial direction Y of the crankshaft 5. Therefore, it is more preferable that the magnetic flux input surface DP of the magnetic detection device (magnetic detection devices 51 to 53) is arranged so as to at least partially overlap the third position P3 with respect to the radial direction Y of the crankshaft 5.

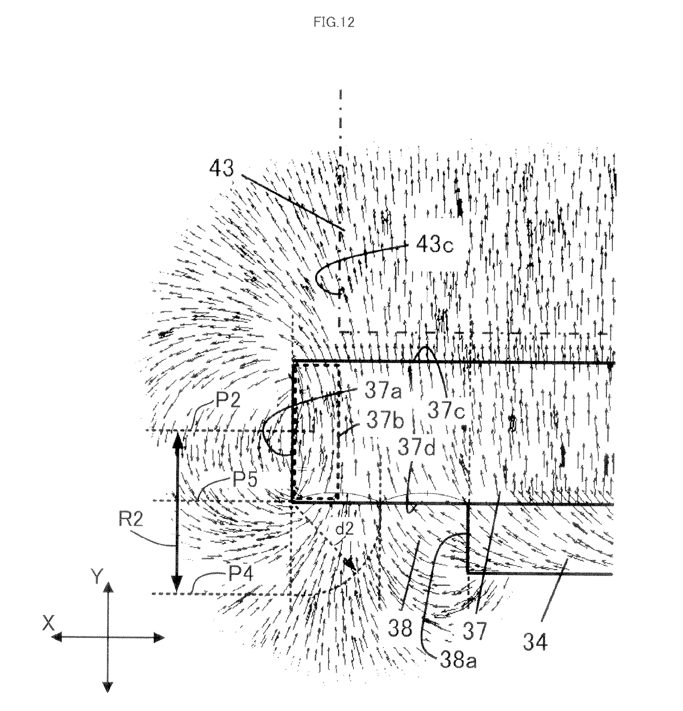

FIG. 12 shows a magnetic flux distribution in a place where the notch 38 of the rotor yoke RY is provided. In FIG. 12, a region R2 sandwiched between the two, upper and lower broken lines indicates a preferable region where the fourth magnetic detection device 54 is preferably arranged.

Details of the preferable region R2 will be described with reference to FIG. 12. In this embodiment, the notch 38 is formed in a part of the peripheral wall 34 of the rotor yoke RY with respect to the circumferential direction of the rotor yoke RY. The outer end surface 37d of the permanent magnet part 37 with respect to the radial direction Y of the crankshaft 5 is exposed to the outside through the notch 38. As shown in FIG. 12, the magnetic fluxes of the permanent magnet part 37 enter and exit through the notch 38. The fourth magnetic detection device 54 detects a change in magnetic fluxes at a side surface where the notch 38 is provided. The magnetic fluxes emitted from the protruding portion 37b of the permanent magnet part 37 are inputted to the magnetic flux input surface DP of the fourth magnetic detection device 54. The fourth magnetic detection device 54 detects a change in magnetic fluxes that enter and exit the protruding portion 37b of the permanent magnet part 37.

The preferable region R2 is a region located between the second position P2 shown in FIG. 12 and a fourth position P4. It is preferable that the magnetic flux input surface DP of the fourth magnetic detection device 54 is at least partially arranged in the region R2. The definition of the second position P2 is as described above.

The fourth position P4 is defined as follows. A distance corresponding to half of an interval 2d2 is defined as d2. The interval 2d2 is an interval between the end surface 37a of the permanent magnet part 37 and an end surface 38a in the notch 38 (for example, a surface that defines the deepest portion of the notch 38) that faces the magnetic flux input surfaces DP (not shown) with respect to the axial direction X of the crankshaft 5. Then, a position is set that is at a distance d2 toward the outside with respect to the radial direction Y from the outer end surface 37d of the permanent magnet part 37 with respect to the radial direction Y of the crankshaft 5. The position thus set is defined as the fourth position P4 with respect to the radial direction Y of the crankshaft 5.

In the region R2 located between the second position P2 and the fourth position P4, as shown in FIG. 12, the magnetic fluxes entering and existing the notch 38 tend to be oriented in the axial direction X of the crankshaft 5. Since the magnetic flux input surface DP of the fourth magnetic detection device 54 is at least partially arranged in the region R2, the magnetic fluxes are inputted to the magnetic flux input surface DP of the fourth magnetic detection device 54 at the right angle or an acute angle relative to the magnetic flux input surface DP of the fourth magnetic detection device 54. In the region R2, the amount and direction of the magnetic fluxes do not largely vary at any position with respect to the axial direction X of the crankshaft 5. Accordingly, a change in the position of the fourth magnetic detection device 54 with respect to the axial direction X of the crankshaft 5 does not give a large influence to the detection accuracy.

In the region R2, the tendency that the magnetic fluxes are oriented in the axial direction X of the crankshaft 5 is higher at a location between the fourth position P4 and the fifth position P5, as shown in FIG. 12. The fifth position P5 is defined as a position corresponding to the outer end surface 37d of the permanent magnet part 37 with respect to the radial direction Y of the crankshaft 5. Therefore, it is preferable that the magnetic flux input surface DP of the fourth magnetic detection device 54 is at least partially arranged between the fourth position P4 and the fifth position P5.

As thus far described, in the rotating electric machine SG of this embodiment, even when the position of attachment of the stator 40 to the crankshaft 5 is deviated so that the interval between the permanent magnet part 37 and the magnetic flux input surface DP is different from an intended interval, little influence is given to the magnetic fluxes inputted to the magnetic flux input surfaces DP. Therefore, the first to fourth magnetic detection devices 51 to 54 can reliably detect a change in the magnetic fluxes of the permanent magnet parts 37. Additionally, since the magnetic fluxes of the permanent magnet parts 37 are inputted to the magnetic flux input surfaces DP without interposition of any other magnetic elements, it is possible to enhance the detection accuracy by adjusting the positional relationship of the permanent magnet part 37 and the magnetic flux input surface DP relative to each other. Therefore, improving the detection accuracy is relatively easy. Moreover, an increase in the number of parts can be restricted, thus achieving a simple structure. Furthermore, a high accuracy is not required in assembling the rotating electric machine SG to a main body of the engine E, thus facilitating an assembling operation.

Even when the positions of the permanent magnet part 37 and the magnetic flux input surface DP relative to each other with respect to the radial direction Y of the crankshaft 5 vary along with vibrations of the crankshaft 5, the detection sensitivity of the first to fourth magnetic detection devices 51 to 54 does not largely vary. Accordingly, the first to fourth magnetic detection devices 51 to 54 are able to reliably detect a change in the magnetic fluxes of the permanent magnet parts 37. Thus, after the rotating electric machine SG is assembled to the main body of the engine E, the first to fourth magnetic detection devices 51 to 54 are still able to correctly and reliably detect the rotational position of the rotor 30. As a result, a reliable control of the rotating electric machine SG by using a detected signal is achieved

The magnetic flux input surfaces DP of the first to fourth magnetic detection devices 51 to 54 are arranged at the positions distant from the end surface 37a of the permanent magnet part 37 with respect to the axial direction X of the crankshaft 5. The first to fourth magnetic detection devices 51 to 54 are arranged apart from both the rotor 30 and the stator 40 with respect to the axial direction X of the crankshaft 5. In this case, as compared with a case where the first to fourth magnetic detection devices 51 to 54 are arranged between adjacent teeth 43, Joule heat generated in the stator 40 is less influential. As a result, a deterioration in detection characteristics and occurrence of breakdown can be prevented which may be otherwise caused by heating of the first to fourth magnetic detection devices 51 to 54.

In the rotating electric machine SG of this embodiment, the permanent magnet part 37 includes the protruding portion 37b. The magnetic fluxes emitted from the permanent magnet part 37 to the gap space between the end surface 37a of the protruding portion 37b and the magnetic flux input surfaces DP with respect to the axial direction X of the crankshaft 5 are inputted to the magnetic flux input surfaces DP. The magnetic fluxes emitted from the permanent magnet part 37 to the gap space are more stable at any position with respect to the axial direction X and the radial direction Y of the crankshaft 5. This enables the magnetic detection devices 51 to 54 to more correctly and reliably detect the rotational position of the rotor 30.

In the rotating electric machine SG of this embodiment, the magnetic flux input surfaces DP are at least partially positioned closer to the permanent magnet part 37 than to a surface 43d of the tooth 43 opposed to the permanent magnet part 37 with respect to the radial direction Y of the crankshaft 5. In such a location, the magnetic fluxes emitted from the permanent magnet part 37 to the gap space between the end surface 43c of the tooth 43 and the magnetic flux input surfaces DP with respect to the axial direction X of the crankshaft 5 are still more stable at any position with respect to the axial direction X and the radial direction Y of the crankshaft 5. This enables the magnetic detection devices 51 to 54 to further correctly and reliably detect the rotational position of the rotor 30.

In the rotating electric machine SG of this embodiment, the magnetic flux input surfaces DP are at least partially arranged between the first position P1 and the second position P2 with respect to the radial direction Y of the crankshaft 5. This enables the magnetic detection devices 51 to 53 to more correctly and reliably detect the rotational position of the rotor 30.

In the rotating electric machine SG of this embodiment, the magnetic flux input surfaces DP are at least partially arranged between the first position P1 and the third position P3 with respect to the radial direction Y of the crankshaft 5. This enables the magnetic detection devices 51 to 53 to more correctly and reliably detect the rotational position of the rotor 30.

In the rotating electric machine SG of this embodiment, the magnetic flux input surfaces DP are arranged so as to at least partially overlap the third position P3 with respect to the radial direction Y of the crankshaft 5. This enables the magnetic detection devices 51 to 53 to further correctly and reliably detect the rotational position of the rotor 30.

In the rotating electric machine SG of this embodiment, the magnetic flux input surface DP of the magnetic detection device 54 is at least partially arranged between the second position P2 and the fourth position P4. This enables reliable detection of a change in magnetic fluxes.

In the rotating electric machine SG of this embodiment, the magnetic flux input surface DP of the magnetic detection device 54 is at least partially arranged between the fourth position P4 and the fifth position P5. This enables further reliable detection of a change in magnetic fluxes.

In the rotating electric machine SG of this embodiment, the magnetic flux input surface DP of the magnetic detection device 54 is arranged so as to at least partially overlap the fourth position P4 with respect to the radial direction Y of the crankshaft 5. This enables the magnetic detection device 54 to particularly reliably detect a change in magnetic fluxes.

The engine E of this embodiment corresponds to the engine of the present teaching. The engine E includes the rotating electric machine SG of this embodiment.

The motorcycle of this embodiment corresponds to the vehicle of the present teaching. The motorcycle includes the engine E of this embodiment. The vehicle of the present teaching is not particularly limited, as long as the vehicle includes an engine. For example, a saddle-ride type vehicle such as a motorcycle and an ATV (All-Terrain Vehicle), a four-wheeled vehicle including a passenger compartment, and the like, may be mentioned. The motorcycle is not particularly limited, and examples thereof include a scooter type motorcycle, a moped type motorcycle, an off-road type motorcycle, and an on-road type motorcycle.

The magnetic detection devices 51 to 54 detect magnetic fluxes that are emitted from the permanent magnet part 37 to the gap space between the end surface 43c of the tooth 43 and the magnetic flux input surfaces DP with respect to the axial direction X of the crankshaft 5 and inputted in the axial direction X of the crankshaft 5 from the gap space to the magnetic flux input surfaces DP. The magnetic fluxes inputted to the magnetic flux input surfaces DP in the axial direction X of the crankshaft 5 are at least partially such magnetic fluxes that form an acute angle relative to the axial direction X of the crankshaft 5. It is preferable that the magnetic fluxes inputted to the magnetic flux input surfaces DP in the axial direction X of the crankshaft 5 at least partially form an angle equal to or less than 45° relative to the axial direction X of the crankshaft 5. It is more preferable that the magnetic fluxes inputted to the magnetic flux input surfaces DP in the axial direction X of the crankshaft 5 are at least partially in parallel with the axial direction X of the crankshaft 5.

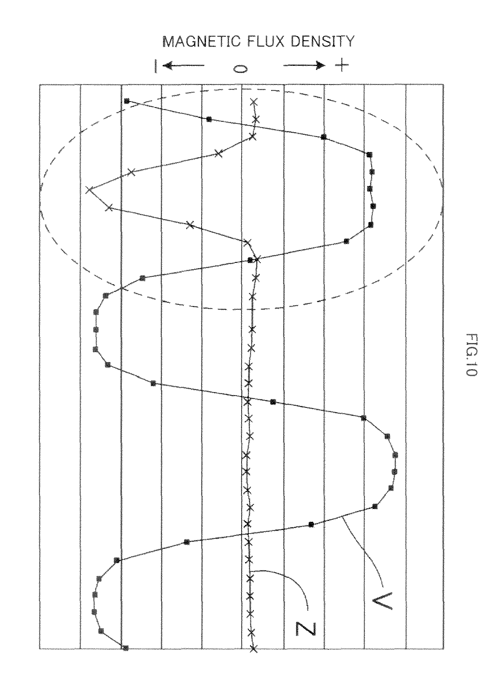

FIG. 10 is a graph showing output signals of the second magnetic detection device 52 and the fourth magnetic detection device 54. The vertical axis represents the magnetic flux density. The horizontal axis represents the rotation angle of the rotor 30. V represents an output waveform of the second magnetic detection device 52. Z represents an output waveform of the fourth magnetic detection device 54.

The second magnetic detection device 52 detects magnetic fluxes of the permanent magnet part 37 each time the rotor 30 rotates through a predetermined rotation angle. This is why, in the output waveform V, the magnetic flux density increases each time the rotor 30 rotates through the predetermined rotation angle. The first magnetic detection device 51 and the third magnetic detection device 53 also detect magnetic fluxes of the permanent magnet part 37 each time the rotor 30 rotates through the predetermined rotation angle, though not shown.

The fourth magnetic detection device 54 is configured to detect the notch 38 each time the rotor 30 rotates through 360°. This is why, in the output waveform Z, the magnetic flux density decreases each time the rotor 30 rotates through 360° (a region enclosed by the broken line in FIG. 10).

Although this embodiment has been described above, the present teaching is not limited to this embodiment.

In the rotating electric machine SG according to this embodiment, the rotor yoke RY is configured such that the peripheral wall 34 extends toward the crank casing 1 from the outer circumferential edge of the bottom wall 33. Instead, the rotor yoke may be configured such that the peripheral wall extends toward the side opposite to the crank casing 1 (in the right direction in FIG. 2) from the outer circumferential edge of the bottom wall. In such a case, the magnetic detector unit 50 is arranged in a side portion of the peripheral wall of the rotor yoke, the side portion being located opposite to the crank casing 1.

The rotating electric machine SG according to this embodiment is a so-called outer-rotor rotating electric machine. Thus, the rotor 30 is arranged outside the stator 40, and the rotor 30 rotates in the outside of the stator 40. Here, the present teaching is not limited to the outer-rotor rotating electric machine. The rotating electric machine of the present teaching may be an inner-rotor rotating electric machine. It suffices that the rotating electric machine of the present teaching is of radial gap type, and the rotating electric machine of the present teaching may be either an outer-rotor rotating electric machine or an inner-rotor rotating electric machine.

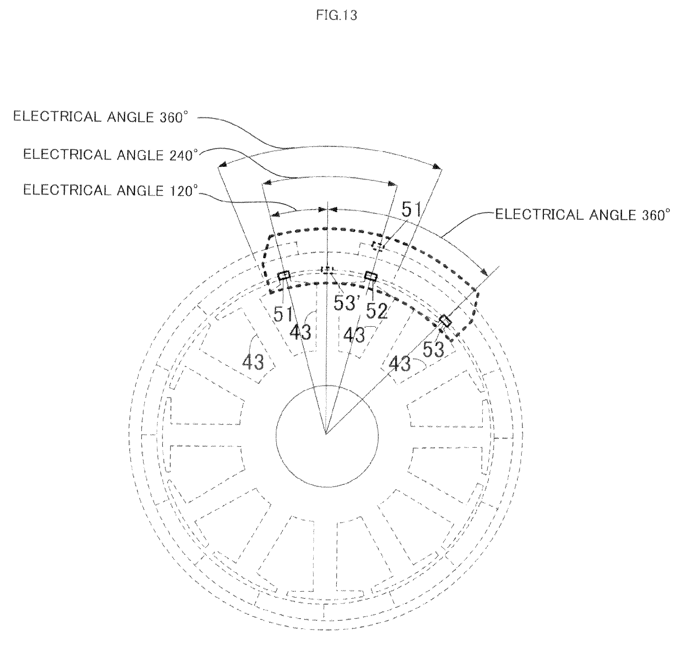

In this embodiment, as shown in FIG. 5, the magnetic flux input surfaces DP of the first to third magnetic detection devices 51 to 53 are arranged at the positions corresponding to a space between the lateral protrusions 43b of adjacent teeth 43. The present teaching is not limited to this example. For example, it may be acceptable that the third magnetic detection device is arranged between the first magnetic detection device 51 and the second magnetic detection device 52, as indicated by the reference numeral 53' in FIG. 13. However, it is preferable that the first to third magnetic detection devices 51 to 53 are arranged between the lateral protrusions 43b of adjacent teeth 43 as shown in FIG. 13. Arranging the magnetic detection devices 51 to 53 in this manner makes it less likely that the magnetic detection devices 51 to 53 are influenced by magnetic fluxes emitted from the stator 40 when a current is fed to the windings W. This results in a reduced distortion in the waveforms of the detection signals obtained from the magnetic detection devices 51 to 53.

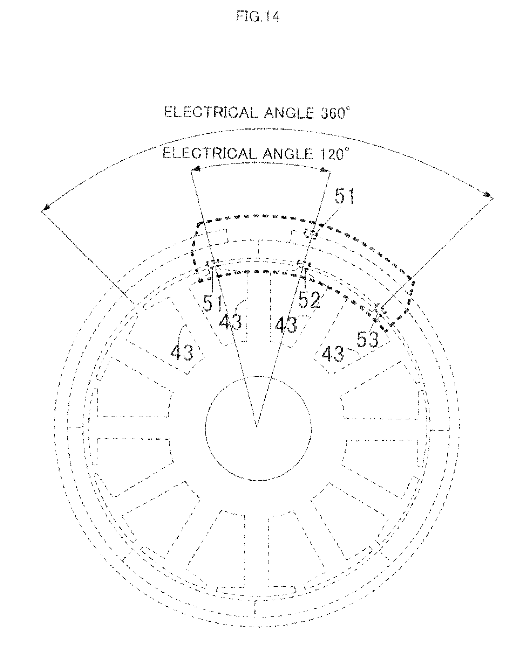

The rotating electric machine shown in FIG. 13 is a rotating electric machine having a so-called (4:3)-structure. Thus, in the rotating electric machine shown in FIG. 13, the number of magnetic poles is sixteen, the number of slots is twelve, and the ratio of the number of magnetic poles to the number of slots is 4:3. However, the present teaching is not limited to this example. For example, as shown in FIG. 14, the rotating electric machine may be a rotating electric machine having a (2:3)-structure. In the rotating electric machine shown in FIG. 14, the number of magnetic poles is eight, and the number of slots is twelve. However, in the present teaching, no particular limitation is put on the number of magnetic poles and the number of slots.

In this embodiment, as shown in FIGS. 8 and 9, the N pole and the S pole of the permanent magnet part 37 are arranged side by side in the radial direction Y of the crankshaft 5. The magnetic flux input surface DP is arranged at an interval from the end surface 37a of the permanent magnet part 37 with respect to the axial direction X of the crankshaft 5. The magnetic flux input surface DP is substantially in parallel with the end surface 37a of the permanent magnet part 37. The magnetic flux input surface DP does not overlap the permanent magnet part 37 when seen in the radial direction Y of the crankshaft 5 (in the direction in which the N pole and the S pole of the permanent magnet part 37 are arranged side by side). No magnetic element is arranged in a path of magnetic fluxes between the magnetic flux input surface DP and the permanent magnet part 37. The magnetic fluxes emitted from the permanent magnet part 37 are inputted to the magnetic flux input surface DP without interposition of any magnetic element. The magnetic fluxes emitted from the permanent magnet part 37 are directly inputted to the magnetic flux input surface DP.

In the magnetic sensor of the Patent Document 2, in contrast, the magnetic flux input surface overlaps the magnet when seen in the radial direction of the crankshaft (in the direction in which the S pole and the N pole of the magnet are arranged side by side).

In the Patent Document 3, the magnetic sensors, the guide elements, and the short guide element constitute the magnetic detection device. Magnetic fluxes of the magnet are inputted to the guide elements and the short guide element. Magnetic fluxes from the guide elements and the short guide element are inputted to each magnetic sensor. Thus, the guide elements and the short guide element include magnetic flux input surfaces to which the magnetic fluxes of the magnet are inputted. In the Patent Document 3, the magnetic flux input surfaces included in the guide elements and the short guide element overlap the magnet when seen in the radial direction of the crankshaft (in the direction in which the S pole and the N pole of the magnet are arranged side by side).

In the Patent Document 4, the magnetic sensors, the long magnetic elements, and the short magnetic element constitute the magnetic detection device. Magnetic fluxes of the magnet are inputted to the long magnetic elements and the short magnetic element. Magnetic fluxes from the long magnetic elements or the short magnetic element are inputted to each magnetic sensor. Thus, the long magnetic elements and the short magnetic element include magnetic flux input surfaces to which the magnetic fluxes of the magnet are inputted. In the Patent Document 4, the magnetic flux input surfaces included in the long magnetic elements and the short magnetic element overlap the magnet when seen in the radial direction of the crankshaft (in the direction in which the S pole and the N pole of the magnet are arranged side by side).

Therefore, in the Patent Documents 2 to 4, magnetic fluxes detected by the magnetic detection device are magnetic fluxes emitted from the magnet in the radial direction of the crankshaft (in the direction in which the S pole and the N pole of the magnet are arranged side by side). That is, in the Patent Documents 2 to 4, magnetic fluxes detected by the magnetic detection device are magnetic fluxes inputted to the magnetic flux input surfaces that are opposed to the magnet with respect to the radial direction of the crankshaft.

In this embodiment, on the other hand, the magnetic flux input surfaces DP of the magnetic detection devices 51 to 54 are arranged so as to cross the axial direction X of the crankshaft 5 and arranged at a position distant from the end surface 37a of the permanent magnet part 37 with respect to the axial direction X of the crankshaft 5. The Patent Documents 1 to 4 do not disclose any configuration corresponding to the magnetic flux input surface DP of this embodiment.

The magnetic detection devices 51 to 54 of this embodiment detect magnetic fluxes that are emitted from the permanent magnet part 37 to the gap space between the end surface 43c of the tooth 43 and the magnetic flux input surfaces DP with respect to the axial direction X of the crankshaft 5 and inputted in the axial direction X of the crankshaft 5 from the gap space to the magnetic flux input surfaces DP. The Patent Documents 1 to 4 do not disclose any configuration corresponding to the magnetic detection devices 51 to 54 of this embodiment.

In the present disclosure, the term "preferably" is non-exclusive and means "preferably, but not limited to."

### [DESCRIPTION OF THE REFERENCE SIGNS]

- 1: crank casing
- 2: cylinder
- 3: piston
- 4: connecting rod
- 5: crankshaft
- 5a: one end portion of crankshaft
- 30: rotor
- 33: bottom wall
- 34: peripheral wall
- 37: permanent magnet part
- 37a: end surface of permanent magnet part
- 37b: protruding portion of permanent magnet part
- 37c: inner end surface of permanent magnet part with respect to radial direction of crankshaft
- 37d: outer end surface of permanent magnet part with respect to radial direction of crankshaft
- 38: notch
- 38a: end surface defining notch and facing magnetic flux input surface
- 40: stator
- 43: tooth
- 43c: end surface of tooth
- 43d: surface of tooth opposed to permanent magnet part
- 50: magnetic detector unit
- 51: first magnetic detection device
- 52: second magnetic detection device
- 53: third magnetic detection device
- 54: fourth magnetic detection device
- E: engine
- P1: first position
- P2: second position
- P3: third position
- P4: fourth position
- P5: fifth position
- RY: rotor yoke
- SY: stator yoke
- SG: rotating electric machine
- DP: magnetic flux input surface of magnetic detection device
- W: winding
- X: axial direction of crankshaft
- Y: radial direction of crankshaft

## Claims

1. A rotating electric machine mounted to an engine (E), the rotating electric machine comprising:
a rotor (30) including a rotor yoke part (RY) and a permanent magnet part (37) provided to the rotor yoke part (RY), the rotor yoke part (RY) being mounted to a crankshaft (5) of the engine (E) and configured to rotate together with the crankshaft (5);
a stator (40) including teeth (43) on each of which a winding is wound, the stator (40) being arranged such that the teeth (43) are opposed to the permanent magnet part (37) with respect to a radial direction of the crankshaft (5); and
a magnetic detection device (51 to 54),
the magnetic detection device (51 to 54) including a magnetic flux input surface (DP) that is arranged so as to cross an axial direction of the crankshaft (5) and
arranged at a distant position with respect to the axial direction of the crankshaft (5) from an end surface of the permanent magnet part (37a) and from an end surface of the teeth (43c), the magnetic detection device (51 to 54) being configured to detect magnetic fluxes that are emitted from the permanent magnet part (37) to a gap space between the end surface of the teeth (43c) and the magnetic flux input surface (DP) with respect to the axial direction of the crankshaft (5) and inputted in the axial direction of the crankshaft (5) from the gap space to the magnetic flux input surface (DP).

2. A rotating electric machine according to claim 1, wherein the permanent magnet part (37) includes a protruding portion (37b) that protrudes beyond the end surface of the teeth (43c) with respect to the axial direction of the crankshaft (5) toward the magnetic flux input surface (DP),
the magnetic flux input surface (DP) is arranged at a distant position with respect to the axial direction of the crankshaft (5) from an end surface of the protruding portion (37b),
the gap space is a space between the end surface of the protruding portion (37b) and the magnetic flux input surface (DP) with respect to the axial direction of the crankshaft (5),
the magnetic detection device (51 to 54) detects magnetic fluxes that are emitted from the permanent magnet part (37) to the gap space and inputted in the axial direction of the crankshaft (5) from the gap space to the magnetic flux input surface (DP).

3. A rotating electric machine according to claim 1 or 2, wherein the magnetic flux input surface (DP) is at least partially arranged at a position closer to the permanent magnet part (37) than to a surface of the teeth (43d) opposed to the permanent magnet part (37) with respect to the radial direction of the crankshaft (5).

4. A rotating electric machine according to any one of claims 1 to 3, wherein the magnetic flux input surface (DP) is at least partially arranged between a first position (P1) and a second position (P2) with respect to the radial direction of the crankshaft (5),
the first position (P1) is defined as a position with respect to the radial direction of the crankshaft (5), the first position (P1) being a position at a distance toward radially inside from an inner end surface (37c) of the permanent magnet part (37) with respect to the radial direction of the crankshaft (5), the distance corresponding to an interval between the end surface of the permanent magnet part (37) and the end surface of the teeth (43c) with respect to the axial direction of the crankshaft (5),
the second position (P2) is defined as a position with respect to the radial direction of the crankshaft (5), the second position (P2) being an intermediate position between the inner end surface (37c) and an outer end surface (37d) of the permanent magnet part (37) with respect to the radial direction of the crankshaft (5).

5. A rotating electric machine according to claim 4, wherein the magnetic flux input surface (DP) is at least partially arranged between the first position (P1) and a third position (P3) with respect to the radial direction of the crankshaft (5),
the third position (P3) is defined as a position with respect to the radial direction of the crankshaft (5), the third position (P3) being a position where the inner end surface (37c) of the permanent magnet part (37) with respect to the radial direction of the crankshaft (5) is located.

6. A rotating electric machine according to claim 5, wherein the magnetic flux input surface (DP) is arranged so as to at least partially overlap the third position (P3) with respect to the radial direction of the crankshaft (5).

7. A rotating electric machine according to claim 1 or 2, wherein the rotor yoke part (RY) has a notch part (38) provided in an end portion of the rotor yoke part (RY), the end portion facing the magnetic flux input surface (DP) with respect to the axial direction of the crankshaft (5), the notch part (38) being formed by cutout of a part of the rotor yoke part (RY) with respect to a circumferential direction thereof,
the permanent magnet part (37) is exposed to the outside through the notch part (38) with respect to the radial direction of the crankshaft (5),
the magnetic flux input surface (DP) is at least partially arranged between a second position (P2) and a fourth position (P4) with respect to the radial direction of the crankshaft (5),
the second position (P2) is defined as a position with respect to the radial direction of the crankshaft (5), the second position (P2) being an intermediate position between an inner end surface (37c) and an outer end surface (37d) of the permanent magnet part (37) with respect to the radial direction of the crankshaft (5),
the fourth position (P4) is defined as a position with respect to the radial direction of the crankshaft (5), the fourth position (P4) being a position at a distance toward radially outside from the outer end surface (37d) of the permanent magnet part (37) with respect to the radial direction of the crankshaft (5), the distance corresponding to half of an interval between the end surface of the permanent magnet part (37a) and an end surface (38a) provided in the notch part (38), the end surface (38a) facing the magnetic flux input surface (DP) with respect to the axial direction of the crankshaft (5).

8. A rotating electric machine according to claim 7, wherein the magnetic flux input surface (DP) is at least partially arranged between the fourth position (P4) and a fifth position (P5) with respect to the radial direction of the crankshaft (5),
the fifth position (P5) is defined as a position with respect to the radial direction of the crankshaft (5), the fifth position (P5) being a position where the outer end surface (37d) of the permanent magnet part (37) with respect to the radial direction of the crankshaft (5) is located.

9. A rotating electric machine according to claim 8, wherein the magnetic flux input surface (DP) is arranged so as to at least partially overlap the fourth position (P4) with respect to the radial direction of the crankshaft (5).

10. An engine comprising the rotating electric machine according to any one of claims 1 to 9.

11. A engine according to claim 10, wherein the engine (E) includes the crankshaft (5) and a crank casing,
the magnetic flux input surface (DP) is arranged so as to cross the axial direction of the crankshaft (5) and arranged between the crank casing and the rotor (30) with respect to the axial direction of the crankshaft (5).

12. A vehicle comprising the engine according to claim 10 or 11.
